# EUROPÄISCHE PATENTSCHRIFT

(11) **EP 3 668 694 B1**
(45) Veröffentlichungstag und Bekanntmachung des Hinweises auf die Patenterteilung: **27.11.2024**
(21) Anmeldenummer: 17818118.6
(22) Anmeldetag: 15.12.2017
(51) Int. Cl.: B29C 44/58, B29C 59/00, B29C 64/00, B29C 33/00, B29K 105/04

(54) **SCHÄUMWERKZEUG**
FOAMING TOOL
OUTIL DE MOUSSAGE

(30) Priorität: 18.08.2017 DE 102017118960
(43) Veröffentlichungstag der Anmeldung: 24.06.2020
(73) Patentinhaber: Siegfried Hofmann GmbH, 96215 Lichtenfels (DE)
(72) Erfinder: SCHÜTZ, Johannes, 96215 Lichtenfels (DE); BECK, Jonas, 96050 Bamberg (DE); SCHMIEDECK, Marcus, 09557 Flöha OT Falkenau (DE)
(74) Vertreter: Hafner & Kohl PartmbB
(86) Internationale Anmeldenummer: PCT/EP2017/083111
(87) Internationale Veröffentlichungsnummer: WO 2019/034269

(56) Entgegenhaltungen:
- EP-A1- 0 798 095
- EP-A1- 2 875 928
- WO-A1-2017/022145
- WO-A1-2017/134181
- DE-A1- 10 051 893
- DE-A1- 102015 115 821
- DE-A1- 102017 216 944
- DE-A1- 19 744 165
- DE-T5- 112016 003 471
- JP-A- 2000 037 744
- US-A1- 2005 112 230
- US-A1- 2007 007 699

## Beschreibung

Die Erfindung betrifft ein Schäumwerkzeug zur Verarbeitung schäumbarer Kunststoffpartikel, mit wenigstens einem wenigstens einen Abschnitt einer Kavität ausbildenden Bereich.

Derartige Schäumwerkzeuge sind aus dem Stand der Technik hinlänglich bekannt. Diese werden zur Herstellung bzw. zur Formgebung von Formteilen aus schäumbaren Kunststoffpartikeln, beispielsweise als Formteilautomaten verwendet. Derartige Formteilautomaten weisen wenigstens ein Schäumwerkzeug auf, sodass diese beispielsweise zwei Platten umfassen, die hubartig aufeinander zu- bzw. voneinander wegbewegbar sind. Zwischen derartigen Schäumwerkzeugen bildet sich somit eine Kavität aus, die einen Formhohlraum vorgibt, in dem die schäumbaren Kunststoffpartikel geformt werden können. Als Schäumwerkzeug wird im Rahmen dieser Anmeldung auch ein Bestandteil eines Werkzeugs verstanden, der einen Abschnitt einer Kavität ausbildet.

Zur Herstellung werden die schäumbaren und/oder vorgeschäumte Kunststoffpartikel in die Kavität eingebracht und beispielsweise mittels heißen Dampfs unter Aufquellen oder durch Expandieren in ihr ursprüngliches Volumen geformt. Es können somit auch Materialien Anwendung finden, die kein aktives Treibmittel aufweisen. Dabei legt die Oberfläche bzw. die Oberflächenstruktur der Kavität die Oberflächenstruktur des Formteils fest, die dieses anschließend an die Herstellung aufweist. Dabei ist es möglich, die Oberfläche der Kavität entsprechend den Anforderungen an die Oberfläche des damit hergestellten Formteils zu wählen, sodass das Formteil nach dem Entformen die entsprechende durch das Schäumwerkzeug geformte Oberfläche aufweist.

DE19744165 offenbart eine Schäumwerkzeug gemäß dem Oberbegriff von Anspruch 1.

Bei der Herstellung derartiger Schäumwerkzeuge bzw. deren Oberflächenstrukturen ist es bekannt, mittels subtraktiver Verfahren, wie beispielsweise Fräsen, Erodieren, Ätzen oder Laserabtragung entsprechende Oberflächenstrukturen in die Oberflächen der Schäumwerkzeuge einzubringen. Ferner sind umformende Verfahren, wie beispielsweise Prägen bekannt. Dabei ist zum einen nachteilig, dass durch das subtraktive bzw. umformende Verfahren Material verloren geht. Die Schäumwerkzeuge müssen sonach mit einem Übermaß hergestellt werden, das nachträglich abgetragen bzw. umgeformt werden muss.

Ferner ist durch die bekannten Verfahren eine Beschränkung hinsichtlich der ausführbaren Geometrien bzw. Oberflächenstrukturen der Oberfläche der Schäumwerkzeuge gegeben.

Der Erfindung liegt daher die Aufgabe zugrunde ein demgegenüber verbessertes Schäumwerkzeug anzugeben.

Die Aufgabe wird durch ein Schäumwerkzeug der eingangs genannten Art gelöst, bei dem erfindungsgemäß die Merkmale des Anspruchs 1 vorgesehen sind.

Die Erfindung beruht demnach auf der Erkenntnis, dass die Oberflächenstruktur bzw. wenigstens ein Teil der Oberflächenstruktur des die Kavität ausbildenden Bereichs durch ein additives Verfahren hergestellt ist. Dadurch ist es möglich, die Oberflächenstruktur additiv aufzubauen, sodass kein subtraktives bzw. umformendes Nachbearbeitungsverfahren nötig ist, um die gewünschte Oberflächenstruktur in das Schäumwerkzeug einzubringen bzw. das Schäumwerkzeug mit der entsprechenden Oberflächenstruktur zu versehen.

Zum einen ist dadurch gewährleistet, dass der Materialausschuss reduziert werden kann, da in dem additiven Verfahren lediglich das Material additiv auf das Werkstück bzw. die vorhandene Oberfläche aufgetragen wird, das für die Ausbildung der Oberflächenstruktur nötig ist. Es ist somit möglich, Schäumwerkzeuge mit fertiger Endkontur oder zumindest endkonturnah herzustellen. Selbstverständlich ist es hierbei jedoch nicht ausgeschlossen, dass eine mittels additiven Verfahren hergestellte Oberflächenstruktur nachbearbeitet werden kann.

Daneben können Oberflächenstrukturen realisiert werden, die mit herkömmlichen Fertigungsmethoden bzw. Verfahren nicht herstellbar sind. Die Beschränkungen der bisherigen Verfahren, die Oberflächenstruktur des die Kavität ausbildenden Bereichs betreffend, sind bei additiven Verfahren nicht gegeben, sodass eine Vielzahl von Möglichkeiten besteht, die Oberflächenstruktur des Schäumwerkzeugs auszubilden. insbesondere sind dabei Oberflächenstrukturen möglich, die subtraktiven oder umformenden Verfahren nicht zugänglich sind. Beispielsweise ist es somit möglich, Strukturen, wie zum Beispiel Kanäle, oberflächennah, also nahe unter der Oberfläche des die Kavität ausbildenden Bereichs herzustellen, sodass eine direktere Temperierung der Kavität möglich ist. Derartige geschlossene Kanäle, die oberflächennah an der Kavität vorgesehen sind, sind mit umformenden oder subtraktiven Herstellungsverfahren nicht realisierbar.

Die additive Herstellung der Oberflächenstruktur kann sich dabei auf die gesamte Kavität oder nur auf einen Abschnitt einer Kavität, die durch das Schäumwerkzeug gebildet wird, beziehen. Daneben ist es ebenso möglich, nur einen Teilbereich der Oberflächenstruktur der die Kavität begrenzenden Oberfläche des Schäumwerkzeugs durch ein additives Verfahren herzustellen.

Als Kunststoffpartikel für die Herstellung des Formteils können alle geeigneten schäumbaren Kunststoffpartikel, beispielsweise thermoplastische Kunststoffe, insbesondere auf Polyolefin- oder -styrenbasis verwendet werden. Durch die Versinterung der Kunststoffpartikel wird das Formteil geformt.

Gemäß einer bevorzugten Ausgestaltung der Erfindung kann vorgesehen sein, dass der wenigstens eine Teil der Oberflächenstruktur mittels Laserstrahlschmelzen und/oder Binder Jetting und/oder Elektronenstrahlschmelzen und/oder Fused Deposition Modeling und/oder Laser Metal Deposition hergestellt ist. Demnach eignen sich die zuvor genannten Verfahren insbesondere zur Herstellung wenigstens eines Teils der Oberflächenstruktur des die Kavität ausbildenden Bereichs, wobei zur Ausbildung der Oberflächenstruktur selektiv Material aufgetragen und dieses verfestigt wird. Somit können beliebige Oberflächenstrukturen erzeugt werden, die mit herkömmlichen Herstellungsverfahren nicht erreicht werden können. Unter Binder Jetting wird im Rahmen dieser Anmeldung ein Herstellungsverfahren verstanden, bei dem, insbesondere pulverförmiges, Aufbaumaterial mit einem Binder zumindest partiell fixiert wird. Das fixierte Aufbaumaterial kann anschließend beispielsweise gesintert werden. Derartige Herstellungsverfahren sind auch unter dem Namen "Inkjet Technik" bekannt.

Besonders bevorzugt ist dabei vorgesehen, dass der wenigstens eine Teil der Oberflächenstruktur durch sukzessives schichtweises selektives Belichten und damit einhergehendem sukzessivem schichtweisem selektivem Verfestigen von Baumaterialschichten aus einem vermittels eines Energiestrahls verfestigbaren, insbesondere pulverförmigen, Baumaterial hergestellt ist. Der wenigstens eine Teil der Oberflächenstruktur wird demnach durch das schichtweise Verfestigen von zumeist pulverförmigem Baumaterial hergestellt. Dabei wird abwechselnd eine Schicht aus Baumaterial aufgetragen und diese anschließend in den gewünschten Bereichen durch einen Energiestrahl verfestigt. Dadurch entsteht Schicht für Schicht die gewünschte Oberflächenstruktur, die sich durch das additive Herstellungsverfahren aufbaut.

Ferner kann bei der Herstellung des erfindungsgemäßen Schäumwerkzeugs vorgesehen sein, dass der wenigstens eine Teil der Oberflächenstruktur direkt zusammen mit der Herstellung des Werkzeugs oder nachträglich hergestellt ist. Gemäß der ersten Alternative kann demnach vorgesehen sein, dass das Schäumwerkzeug, das wenigstens einen Abschnitt der Kavität ausbildet, bzw. einen Bereich aufweist, der wenigstens einen Abschnitt der Kavität ausbildet, ebenfalls durch ein additives Herstellungsverfahren hergestellt ist. Dabei wird die Oberflächenstruktur des die Kavität ausbildenden Bereichs bzw. wenigstens eines Teils davon zusammen mit der Herstellung des Schäumwerkzeugs hergestellt bzw. ausgebildet.

Gemäß der zweiten Alternative ist es ebenso möglich, bei einem bestehenden Schäumwerkzeug durch ein additives Herstellungsverfahren die bestehende Oberflächenstruktur zu verändern bzw. eine Oberflächenstruktur auf die Oberfläche des zuvor hergestellten Werkzeugs aufzubringen. Demnach kann das Schäumwerkzeug aus einem vorgefertigten Grundkörper bestehen, auf den zumindest ein Teil der Oberflächenstruktur durch das additive Verfahren aufgebracht wird. Somit können insbesondere Strukturen, die herkömmlichen Herstellungsverfahren nicht zugänglich sind, durch ein additives Verfahren ergänzt werden.

Dabei kann bevorzugt vorgesehen sein, dass wenigstens ein Teil einer Oberflächenstruktur des die Kavität ausbildenden Bereichs separat zu dem Schäumwerkzeug ausgebildet und mit dem Bereich verbindbar oder verbunden ist. Gemäß dieser Ausgestaltung des erfindungsgemäßen Schäumwerkzeugs kann wenigstens ein Teil einer Oberflächenstruktur des die Kavität ausbildenden Bereichs separat zu dem restlichen Schäumwerkzeug ausgebildet bzw. hergestellt sein. Der wenigstens eine Teil der Oberflächenstruktur des die Kavität ausbildenden Bereichs kann somit in das Schäumwerkzeug eingebracht werden, um mit dem Schäumwerkzeug anschließend entsprechende Formteile, die die gewünschte Oberflächenstruktur erhalten sollen, herzustellen.

Besonders bevorzugt kann bei dem erfindungsgemäßen Schäumwerkzeug vorgesehen sein, dass der wenigstens eine Teil als Einlegeteil ausgebildet ist, der in eine korrespondierende Ausnehmung eingelegt oder einlegbar ist. Insbesondere ist es dabei möglich, die entsprechenden Bereiche bzw. Teile der Oberflächenstruktur des Schäumwerkzeugs zu wechseln, sodass mit demselben Schäumwerkzeug verschiedene Oberflächenstrukturen erzeugt werden können. Dazu können beispielweise Einlegeteile vorgesehen sein, die additiv hergestellt sind und eine gewisse, definierte Oberflächenstruktur aufweisen. Durch das Einbringen derartiger Einlegeteile in das Schäumwerkzeug ist eine Herstellung diverser Formteile mit unterschiedlichen Oberflächenstrukturen möglich. Die verschiedenen Einlegeteile können dabei gewechselt werden, falls mit demselben Schäumwerkzeug Formteile mit anderer Oberflächenstruktur gefertigt werden sollen.

Das erfindungsgemäße Schäumwerkzeug kann ferner dahingehend weitergebildet werden, dass der wenigstens eine Teil der Oberfläche nachträglich auf ein bestehendes Bauteil aufgebracht oder eine bestehende Oberflächenstruktur um den wenigstens einen Teil ergänzt ist. Gemäß dieser Ausgestaltung der Erfindung ist sonach eine gewisse Hybrid-Bauweise vorgeschlagen, bei der auf ein bestehendes Schäumwerkzeug eine definierte Oberflächenstruktur aufgebracht wird oder eine bestehende Oberflächenstruktur entsprechend ergänzt wird. Dadurch können verschiedene Herstellungsverfahren kombiniert werden, sodass ein Teil des Schäumwerkzeugs durch herkömmliche Verfahren herstellbar ist und lediglich Bereiche bzw. Teile der Oberfläche oder der Oberflächenstruktur, die beispielsweise durch herkömmliche Verfahren nicht hergestellt werden können, mittels additiver Verfahren hergestellt sind. Selbstverständlich ist der Anteil der Herstellung an additiven Herstellungsverfahren dabei beliebig wählbar.

Gemäß einer weiteren bevorzugten Ausgestaltung des erfindungsgemäßen Schäumwerkzeugs kann vorgesehen sein, dass wenigstens eine Information, den wenigstens einen Teil der Oberflächenstruktur betreffend, mittels CAD (computer aided design) oder mittels wenigstens eines Maschinenparameters erzeugbar ist. Die wenigstens eine Information kann besonders bevorzugt dazu dienen, die Oberflächenstruktur zu beschreiben, beispielsweise ein geometrisches bzw. dreidimensionales Modell der Oberflächenstruktur, die das Schäumwerkzeug aufweisen soll, vorzugeben bzw. zu erstellen. Ebenso ist es möglich, durch eine geeignete Einstellung strukturbildender Maschinenparameter die gewünschte Oberflächenstruktur zu erzeugen.

Gemäß einer weiteren bevorzugten Ausgestaltung des erfindungsgemäßen Schäumwerkzeugs kann vorgesehen sein, dass der wenigstens eine Teil der Oberflächenstruktur durch wenigstens einen Verfahrensschritt nachbearbeitet ist, vorzugsweise durch ein abrasives Verfahren und/oder Laserabtragung und/oder ein chemisches oder elektrisches Glättungsverfahren und/oder ein verdichtendes oder mikroumformendes Verfahren. Demnach kann der wenigstens eine Teil der Oberflächenstruktur, der erfindungsgemäß additiv hergestellt wurde, entsprechend nachbearbeitet werden. Durch die Nachbearbeitungsverfahren bzw. den wenigstens einen Verfahrensschritt zur Nachbearbeitung kann die Oberflächenstruktur bzw. die Oberfläche des Schäumwerkzeugs definiert bearbeitet werden, sodass die Oberfläche eine definierte Qualität aufweist. Als verdichtendes oder mikroumformendes Verfahren kann insbesondere ein Bestrahlen der Oberfläche mit Glasperlen Anwendung finden.

Der wenigstens eine Teil der Oberflächenstruktur des die Kavität ausbildenden Bereichs weist gemäß einer bevorzugten Ausgestaltung wenigstens zwei Unterbereiche mit unterschiedlicher Oberflächenstruktur auf. Gemäß dieser Ausgestaltung ist es demnach möglich, einen Teil der Oberflächenstruktur des die Kavität ausbildenden Bereichs additiv herzustellen, wobei die Oberflächenstruktur in wenigstens zwei Unterbereichen des Teils unterschiedlich ausgebildet ist. insbesondere sind somit verschiedene Unterbereiche herstellbar, die sich hinsichtlich ihrer Oberflächenstruktur unterscheiden. Demnach können beliebige Oberflächenstrukturen ausgebildet werden, die anschließend bei der Herstellung des Formteils auf dieses übertragen werden.

Das erfindungsgemäße Schäumwerkzeug wird ferner dahingehend weitergebildet , dass die Oberflächenstruktur wenigstens eine Erhebung und/oder wenigsten eine Vertiefung in der Oberfläche des Schäumwerkzeugs ausbildet oder eine solche umfasst. Im Gegensatz zu subtraktiven Verfahren ist somit neben dem Ausbilden einer Vertiefung in die Oberfläche des Schäumwerkzeugs auch das Aufbringen einer Erhebung möglich. Selbstverständlich kann sowohl das Aufbringen der Erhebung als auch das Ausbilden einer Vertiefung beliebig miteinander kombiniert werden, sodass die resultierende Oberflächenstruktur gegenüber dem Schäumwerkzeug sowohl erhoben, als auch eingetieft ausgebildet sein kann.

Eine Weiterbildung des erfindungsgemäßen Schäumwerkzeugs kann ferner darin bestehen, dass der wenigstens eine Teil eine Oberflächenstruktur derart aufweist, dass ein vermittels des Schäumwerkzeugs hergestelltes Produkt bei der Herstellung mit wenigstens einer Information versehen werden kann. Die wenigstens eine Information kann beispielsweise ein Motiv oder ein Schriftzug, insbesondere die Herstellung des Formteils betreffend, sein oder ein solches beinhalten. Beispielsweise ist es somit möglich, ein Zeichen des Herstellers bzw. ein Herstellungsdatum oder eine Chargennummer in die Oberflächenstruktur zu integrieren, sodass das hergestellte Produkt die Information ebenfalls auf dessen Oberflächenstruktur trägt.

Daneben betrifft die Erfindung ein Verfahren zur Herstellung eines erfindungsgemäßen Schäumwerkzeugs mit wenigstens einem wenigstens einen Abschnitt einer Kavität ausbildenden Bereich. Selbstverständlich sind sämtliche Vorteile, Einzelheiten und Merkmale, das erfindungsgemäße Schäumwerkzeug betreffend, auf das erfindungsgemäße Verfahren übertragbar.

Besonders bevorzugt ist bei dem erfindungsgemäßen Verfahren vorgesehen, dass der wenigstens eine Teil der Oberflächenstruktur durch sukzessives schichtweises selektives Belichten und damit einhergehendem sukzessivem schichtweisem selektivem Verfestigen von Baumaterialschichten aus einem vermittels eines Energiestrahls verfestigbaren, insbesondere pulverförmigen, Baumaterial hergestellt wird. Bei dem erfindungsgemäßen Herstellungsverfahren wird sonach schichtweise ein, insbesondere pulverförmiges, Baumaterial aufgetragen und anschließend mittels eines Energiestrahls belichtet und dadurch verfestigt. Durch das selektive Belichten bzw. Verfestigen des Baumaterials bildet sich schichtweise die gewünschte Oberflächenstruktur aus.

Gemäß einer bevorzugten Ausgestaltung des erfindungsgemäßen Verfahrens kann vorgesehen sein, dass der wenigstens eine Teil der Oberflächenstruktur nachträglich auf ein bestehendes Bauteil aufgebracht oder eine bestehende Oberflächenstruktur um den wenigstens einen Teil ergänzt wird. Demnach ist vorgesehen, das Schäumwerkzeug gemäß dem Herstellungsverfahren als Hybrid- Bauteil auszubilden, wobei die gewünschte Oberflächenstruktur bzw. ein Teil davon nachträglich auf das bestehende Bauteil bzw. Halbzeug aufgebracht wird. Ebenso ist es möglich, dass das Schäumwerkzeug bereits eine definierte Oberflächenstruktur aufweist, die um den wenigstens einen Teil der gewünschten Oberflächenstruktur durch das additive Herstellungsverfahren ergänzt wird. Somit ist eine Kombination von herkömmlichen Herstellungsverfahren und additiven Herstellungsverfahren möglich.

Die Erfindung wird nachfolgend anhand von Ausführungsbeispielen unter Bezugnahme auf die Zeichnungen näher erläutert. Die Zeichnungen sind schematische Darstellungen und zeigen:
Fig. 1 ein erfindungsgemäßes Schäumwerkzeug gemäß einem ersten Ausführungsbeispiel;
Fig. 2 der Ausschnitt II-II des erfindungsgemäßen Schäumwerkzeugs von Fig. 1;
Fig. 3 eine erfindungsgemäßes Schäumwerkzeug gemäß einem zweiten Ausführungsbeispiel; und
Fig. 4 ein erfindungsgemäßes Schäumwerkzeug gemäß einem dritten Ausführungsbeispiel.

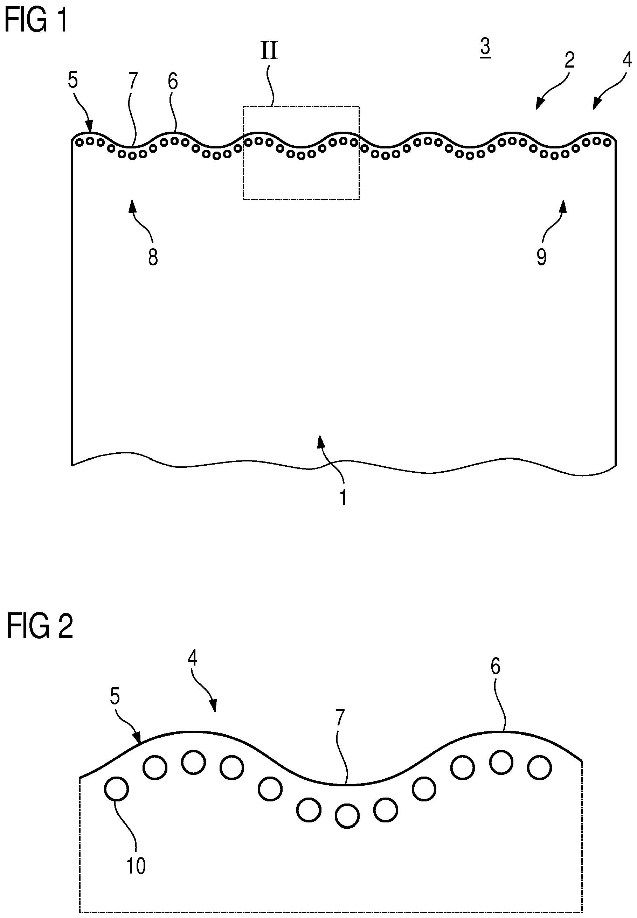

Fig. 1 zeigt ein Schäumwerkzeug 1 zur Verarbeitung schäumbarer oder vorgeschäumter Kunststoffpartikel. Das Schäumwerkzeug 1 weist einen Bereich 2 auf, der einen Abschnitt einer Kavität 3 ausbildet bzw. die Kavität 3 begrenzt. Gemäß dem in Fig. 1 dargestellten ersten Ausführungsbeispiel weist der die Kavität 3 ausbildende Bereich 2 einen Teil 4 mit einer Oberflächenstruktur 5 auf, die durch ein additives Verfahren hergestellt ist. Gemäß diesem Ausführungsbeispiel ist die Oberflächenstruktur 5 mittels Laserstrahlschmelzen hergestellt, wobei die Oberflächenstruktur 5 durch sukzessives schichtweises selektives Belichten und damit einhergehendem sukzessivem schichtweisem selektivem Verfestigen von Baumaterialschichten aus einem vermittels eines Energiestrahls verfestigbaren pulverförmigen Baumaterial hergestellt ist. Selbstverständlich können sämtliche weiteren additiven Herstellungsverfahren zum Herstellen des Schäumwerkzeugs 1 verwendet werden.

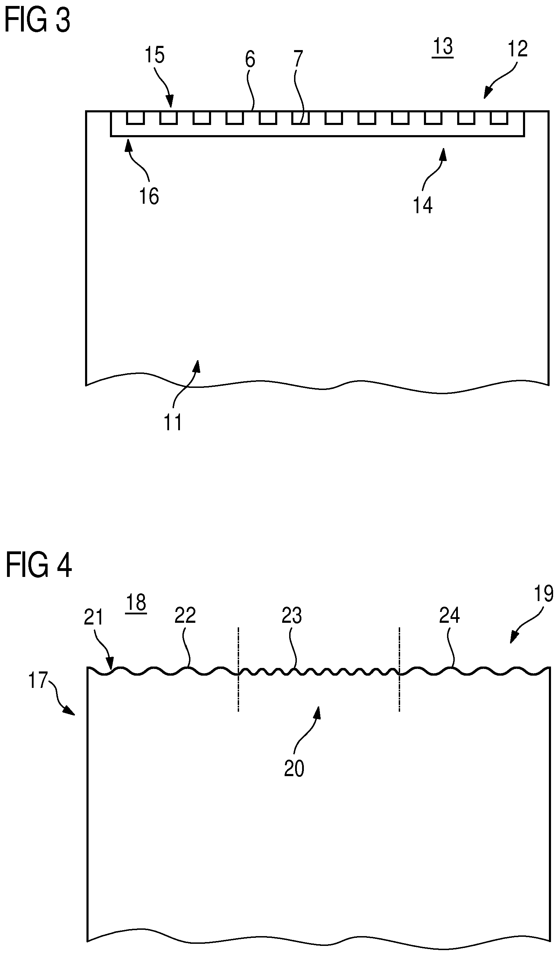

In dem in Fig. 1 gezeigten Ausführungsbeispiel des Schäumwerkzeugs 1 ist die Oberflächenstruktur 5 direkt zusammen mit der Herstellung des restlichen Schäumwerkzeugs 1 hergestellt. Eine alternative separate Herstellung der Oberflächenstruktur ist beispielsweise im zweiten Ausführungsbeispiel mit Bezug auf Fig. 3 gezeigt.

Die Oberflächenstruktur 5 weist mehrere Erhebungen 6 und mehrere Vertiefungen 7 auf, die mittels des additiven Herstellungsverfahrens hergestellt sind. Erfindungsgemäß weist die Oberflächenstruktur 5 zwei Unterbereiche 8, 9 auf, wobei die Oberflächenstruktur 5 in den beiden Unterbereichen 8, 9 unterschiedlich ausgeprägt ist. Die beiden Unterbereiche 8, 9 weisen demnach eine unterschiedlich ausgestaltete Oberflächenstruktur 5 auf.

In Fig. 2 ist der Bereich II-II von Fig. 1 vergrößert dargestellt. Ersichtlich ist die Oberflächenstruktur 5 durch abwechselnd angeordnete Erhebungen 6 und Vertiefungen 7 ausgebildet. Ferner ist ersichtlich, dass die Oberflächenstruktur 5 oberflächennahe Kanäle 10 aufweist, durch die beispielsweise ein Arbeitsfluid gefördert werden kann, um ein Formteil zu temperieren. Die oberflächennahe Anordnung der Kanäle 10 wird durch die Verwendung des additiven Herstellungsverfahrens ermöglicht, wobei diese durch herkömmliche Herstellungsverfahren nicht realisierbar wären.

Fig. 3 zeigt ein Schäumwerkzeug 11 gemäß einem zweiten Ausführungsbeispiel. Das Schäumwerkzeug 11 weist einen Bereich 12 auf, der einen Abschnitt einer Kavität 13 ausbildet. Der Bereich 12 weist einen Teil 14 mit einer Oberflächenstruktur 15 auf, die mittels eines additiven Herstellungsverfahrens hergestellt ist. Die Oberflächenstruktur 15 weist ebenfalls Erhebungen 6 und Vertiefungen 7 auf.

Der Teil 14 ist als Einlegeteil ausgebildet und in eine korrespondierende Ausnehmung 16 im Schäumwerkzeug 11 eingelegt. Selbstverständlich ist der Teil 14 lösbar und somit aus dem Schäumwerkzeug 11 entnehmbar. Somit können verschiedene Einlegeteile in der Ausnehmung 16 aufgenommen werden, sodass verschiedene Oberflächenstrukturen 15 in das Schäumwerkzeug 11 eingebracht werden können bzw. das Teil 14 ausgetauscht werden kann.

Fig. 4 zeigt ein Schäumwerkzeug 17 gemäß einem dritten Ausführungsbeispiel. Das Schäumwerkzeug 17 weist einen einen Abschnitt einer Kavität 18 ausbildenden Bereich 19 auf, der wenigstens einen Teil 20 einer Oberflächenstruktur 21 aufweist. Der Teil 20 der Oberflächenstruktur 21 ist dabei durch ein additives Verfahren hergestellt. Das Schäumwerkzeug 17 gemäß dem in Fig. 4 dargestellten Ausführungsbeispiel weist sonach drei Unterbereiche 22 bis 24 auf, wobei die Oberflächenstruktur 21 in den Unterbereichen 22 und 24 gleich ist und sich von dem Teil 20 der Oberflächenstruktur 21 im Unterbereich 23 unterscheidet. Mit anderen Worten weicht die Oberflächenstruktur 21 in den Unterbereichen 22 und 24 von der Oberflächenstruktur 21 im Bereich 24 ab.

Die Oberflächenstruktur 21 in den Unterbereichen 22 und 24 wurde zusammen mit dem restlichen Schäumwerkzeug 17 direkt bei dessen Herstellung hergestellt. Der Teil 20 der Oberflächenstruktur 21 in dem Unterbereich 23 wurde nachträglich durch ein additives Verfahren aufgebracht. Mit anderen Worten wurde die Oberflächenstruktur 21 um den Unterbereich 23 ergänzt.

Selbstverständlich sind die einzelnen Ausführungsformen, die in den einzelnen Ausführungsbeispielen gezeigt sind beliebig miteinander kombinierbar. Insbesondere kann jede der gezeigten Ausführungsformen mit Kanälen 10 versehen sein. Ebenfalls ist es ebenso möglich die einzelnen Oberflächenstrukturen 5, 15, 21 beliebig in Unterbereiche zu unterteilen bzw. diese direkt mit den einzelnen Schäumwerkzeugen 1, 11, 17 oder nachträglich und/oder separat zu diesen, beispielsweise als Einlegeteile, auszuführen.

### BEZUGSZEICHENLISTE

1 Schäumwerkzeug
2 Bereich
3 Kavität
4 Teil
5 Oberflächenstruktur
6 Erhebung
7 Vertiefung
8 Unterbereich
9 Unterbereich
10 Kanal
11 Schäumwerkzeug
12 Bereich
13 Kavität
14 Teil
15 Oberflächenstruktur
16 Ausnehmung
17 Schäumwerkzeug
18 Kavität
19 Bereich
20 Teil
21 Oberflächenstruktur
22 Unterbereich
23 Unterbereich
24 Unterbereich

## Patentansprüche

1. Schäumwerkzeug (1, 11, 17) zur Verarbeitung schäumbarer Kunststoffpartikel, mit wenigstens einem wenigstens einen Abschnitt einer Kavität (3, 13, 18) ausbildenden Bereich (2, 12, 19), wobei wenigstens ein Teil (4, 14, 20) einer Oberflächenstruktur (5, 15, 21) des die Kavität (3, 13, 18) ausbildenden Bereichs (2, 12, 19) durch ein additives Verfahren hergestellt ist, wobei die Oberflächenstruktur (5, 15, 21) wenigstens eine Erhebung (6) und/oder wenigstens eine Vertiefung (7) in der Oberfläche des Schäumwerkzeugs (1, 11, 17) ausbildet oder eine solche umfasst, **dadurch gekennzeichnet, dass** der wenigstens eine Teil (4, 14, 20) wenigstens zwei Unterbereiche (8, 9, 22 - 24) mit unterschiedlicher Oberflächenstruktur (5, 15, 21) aufweist, wobei die Oberflächenstruktur (5, 15, 21) abwechselnd angeordnete Erhebungen (6) und Vertiefungen (7) aufweist.

2. Schäumwerkzeug nach Anspruch 1, **dadurch gekennzeichnet, dass** der wenigstens eine Teil (4, 14, 20) der Oberflächenstruktur (5, 15, 21) mittels Laserstrahlschmelzen und/oder Binder Jetting und/oder Elektronenstrahlschmelzen und/oder Fused Deposition Modeling und/oder Laser Metal Deposition hergestellt ist.

3. Schäumwerkzeug nach Anspruch 1 oder 2, **dadurch gekennzeichnet, dass** der wenigstens eine Teil (4, 14, 20) der Oberflächenstruktur (5, 15, 21) durch sukzessives schichtweises selektives Belichten und damit einhergehendem sukzessivem schichtweisem selektivem Verfestigen von Baumaterialschichten aus einem vermittels eines Energiestrahls verfestigbaren, insbesondere pulverförmigen, Baumaterial hergestellt ist.

4. Schäumwerkzeug nach einem der vorangehenden Ansprüche, **dadurch gekennzeichnet, dass** der wenigstens eine Teil (20) als Einlegeteil ausgebildet ist, der in eine korrespondierende Ausnehmung (16) eingelegt oder einlegbar ist.

5. Schäumwerkzeug nach einem der vorangehenden Ansprüche, **dadurch gekennzeichnet, dass** der wenigstens eine Teil (4, 14, 20) der Oberflächenstruktur (5, 15, 21) direkt zusammen mit der Herstellung des Schäumwerkzeugs (1, 11, 17) oder nachträglich hergestellt ist.

6. Schäumwerkzeug nach einem der vorangehenden Ansprüche, **dadurch gekennzeichnet, dass** wenigstens ein Teil (4, 14, 20) einer Oberflächenstruktur (5, 15, 21) des die Kavität (3, 13, 18) ausbildenden Bereichs (2, 12, 19) separat zu dem Schäumwerkzeug (1, 11, 17) ausgebildet und mit dem Bereich (2, 12, 19) verbindbar oder verbunden ist.

7. Schäumwerkzeug nach einem der vorangehenden Ansprüche, **dadurch gekennzeichnet, dass** der wenigstens eine Teil (4, 14, 20) der Oberflächenstruktur (5, 15, 21) nachträglich auf ein bestehendes Bauteil aufgebracht oder eine bestehende Oberflächenstruktur (5, 15, 21) um den wenigstens einen Teil (4, 14, 20) ergänzt ist.

8. Schäumwerkzeug nach einem der vorangehenden Ansprüche, **dadurch gekennzeichnet, dass** wenigstens eine Information, den wenigstens einen Teil (4, 14, 20) der Oberflächenstruktur (5, 15, 21) betreffend, mittels CAD oder mittels wenigstens eines Maschinenparameters erzeugbar ist.

9. Schäumwerkzeug nach einem der vorangehenden Ansprüche, **dadurch gekennzeichnet, dass** der wenigstens eine Teil (4, 14, 20) der Oberflächenstruktur (5, 15, 21) durch wenigstens einen Verfahrensschritt nachbearbeitet ist, vorzugsweise durch ein abrasives Verfahren und/oder Laserabtragung und/oder ein chemisches oder elektrisches Glättungsverfahren und/oder ein verdichtendes oder mikroumformendes Verfahren.

10. Schäumwerkzeug nach einem der vorangehenden Ansprüche, **dadurch gekennzeichnet, dass** der wenigstens eine Teil (4, 14, 20) eine Oberflächenstruktur (5, 15, 21) derart aufweist, dass ein vermittels des Schäumwerkzeugs (1, 11, 17) hergestelltes Produkt bei der Herstellung mit wenigstens einer Information versehen werden kann.

11. Verfahren zur Herstellung eines Schäumwerkzeugs (1, 11, 17) nach einem der vorangehenden Ansprüche, mit wenigstens einem wenigstens einen Abschnitt einer Kavität (3, 13, 18) ausbildenden Bereich (2, 12, 19).

12. Verfahren nach Anspruch 11, **dadurch gekennzeichnet, dass** der wenigstens eine Teil (4, 14, 20) der Oberflächenstruktur (5, 15, 21) durch sukzessives schichtweises selektives Belichten und damit einhergehendem sukzessivem schichtweisem selektivem Verfestigen von Baumaterialschichten aus einem vermittels eines Energiestrahls verfestigbaren, insbesondere pulverförmigen, Baumaterial hergestellt wird.

13. Verfahren nach Anspruch 11 oder 12, **dadurch gekennzeichnet, dass** der wenigstens eine Teil (4, 14, 20) der Oberflächenstruktur (5, 15, 21) nachträglich auf ein bestehendes Bauteil aufgebracht oder eine bestehende Oberflächenstruktur (5, 15, 21) um den wenigstens einen Teil (4, 14, 20) ergänzt wird.

## Claims

1. Foaming tool (1, 11, 17) for processing foamable plastic particles, having at least one portion of a cavity (3, 13, 18) forming region (2, 12, 19), wherein at least one part (4, 14, 20) of a surface structure (5, 15, 21) of the cavity (3, 13, 18) forming region (2, 12, 19) is produced by an additive method, wherein the surface structure (5, 15, 21) at least one elevation (6) and / or at least one recess (7) in the surface of the foaming tool (1, 11, 17) forms or comprises such, **characterized in that** the at least one part (4, 14, 20) has at least two sub-areas (8, 9, 22 - 24) with different surface structure (5, 15, 21), wherein the surface structure (5, 15, 21) alternately arranged elevations (6) and recesses (7).

2. Foaming tool according to claim 1, **characterized in that** the at least one part (4, 14, 20) of the surface structure (5, 15, 21) is produced by laser beam melting and / or binder jetting and / or electron beam melting and / or fused deposition modeling and / or laser metal deposition.

3. Foaming tool according to claim 1 or 2, **characterized in that** the at least one part (4, 14, 20) of the surface structure (5, 15, 21) is produced by successive layer-by-layer selective exposure and associated successive layer-by-layer selective solidification of building material layers from a solidifiable by means of an energy beam, in particular powdery, building material.

4. Foaming tool according to one of the preceding claims, **characterized in that** the at least one part (20) is formed as an insertion part which is inserted or insertable into a corresponding recess (16).

5. Foaming tool according to any one of the preceding claims, **characterized in that** the at least one part (4, 14, 20) of the surface structure (5, 15, 21) is produced directly together with the production of the foaming tool (1, 11, 17) or subsequently.

6. Foaming tool according to one of the preceding claims, **characterized in that** at least one part (4, 14, 20) of a surface structure (5, 15, 21) of the cavity (3, 13, 18) forming region (2, 12, 19) is formed separately to the foaming tool (1, 11, 17) and is connectable or connected to the region (2, 12, 19).

7. Foaming tool according to one of the preceding claims, **characterized in that** the at least one part (4, 14, 20) of the surface structure (5, 15, 21) is subsequently applied to an existing component or an existing surface structure (5, 15, 21) is supplemented by the at least one part (4, 14, 20).

8. Foaming tool according to one of the preceding claims, **characterized in that** at least one information concerning at least a part (4, 14, 20) of the surface structure (5, 15, 21) can be generated by means of CAD or by means of at least one machine parameter.

9. Foaming tool according to any one of the preceding claims, **characterized in that** the at least one part (4, 14, 20) of the surface structure (5, 15, 21) is post-processed by at least one process step, preferably by an abrasive method and / or laser ablation and / or a chemical or electrical smoothing method and / or a compacting or microforming method.

10. Foaming tool according to any one of the preceding claims, **characterized in that** the at least one part (4, 14, 20) has a surface structure (5, 15, 21) such that a product produced by means of the foaming tool (1, 11, 17) can be provided with at least one information during production.

11. Method for producing a foaming tool (1, 11, 17) according to any one of the preceding claims, having at least one portion of a cavity (3, 13, 18) forming region (2, 12, 19).

12. Method according to claim 11, **characterized in that** the at least one part (4, 14, 20) of the surface structure (5, 15, 21) is produced by successive layerwise selective exposure and associated successive layerwise selective solidification of building material layers from a solidifiable by means of an energy beam, in particular powdery, building material.

13. Method of claim 11 or 12, **characterized in that** the at least one part (4, 14, 20) of the surface structure (5, 15, 21) is subsequently applied to an existing component or an existing surface structure (5, 15, 21) is supplemented by the at least one part (4, 14, 20).

## Revendications

1. Outil de moussage (1, 11, 17) pour le traitement des particules plastiques moussantes, comprenant au moins une section d'une cavité (3, 13, 18) (2, 12, 19), où au moins une partie (4, 14, 20) d'une structure de surface (5, 15, 21) de la zone formant la cavité (3, 13, 18) (2, 12, 19) est fabriquée par un procédé additif, où la structure de surface (5, 15, 21) forme ou comprend au moins une élévation (6) et/ou au moins un creux (7) à la surface de l'outil **de moussage (1, 11, 17), caractérisé en ce qu'au** moins une partie (4, 14, 20) comporte au moins deux sous-zones (8, 9, 22 - 24) de structure de surface différente (5, 15, 21), la structure de surface (5, 15, 21) présentant des élévations (6) et des creux (7) disposés alternativement.

2. Outil de mousse selon la revendication 1, **caractérisé en ce qu'au** moins une partie (4, 14, 20) de la structure de surface (5, 15, 21) est fabriquée au moyen d'une fusion par faisceau laser et/ou d'une fusion par liant et/ou d'une fusion par faisceau d'électrons et/ou d'une modélisation par dépôt fusionné et/ou d'un dépôt de métal laser.

3. Outil à mousse selon la revendication 1 ou 2, **caractérisé en ce qu'au** moins une partie (4, 14, 20) de la structure de surface (5, 15, 21) est fabriquée à partir d'un matériau de construction solidifiable au moyen d'un faisceau d'énergie, en particulier sous forme de poudre, par exposition sélective successive par couches et par solidification sélective par couches consécutives de couches de matériaux de construction.

4. Outil de moussage selon l'une quelconque des revendications précédentes, **caractérisé en ce qu'au** moins une partie (20) est conçue comme une pièce insert qui est insérée ou insérable dans un évidement correspondant (16).

5. Outil de moussage selon l'une quelconque des revendications précédentes, **caractérisé en ce qu'au** moins une partie (4, 14, 20) de la structure de surface (5, 15, 21) est fabriquée directement avec la fabrication de l'outil de moussage (1, 11, 17) ou ultérieurement.

6. Outil de moussage selon l'une quelconque des revendications précédentes, **caractérisé en ce qu'au** moins une partie (4, 14, 20) d'une structure de surface (5, 15, 21) de la zone formant la cavité (3, 13, 18) (2, 12, 19) est formée séparément de l'outil de moussage (1, 11, 17) et peut être reliée ou reliée à la zone (2, 12, 19).

7. Outil de moussage selon l'une des revendications précédentes, **caractérisé en ce qu'au** moins une partie (4, 14, 20) de la structure de surface (5, 15, 21) est appliquée ultérieurement sur un composant existant ou qu'une structure de surface existante (5, 15, 21) est complétée par au moins une partie (4, 14, 20).

8. Outil de moussage selon l'une quelconque des revendications précédentes, **caractérisé en ce qu'au** moins une information concernant au moins une partie (4, 14, 20) de la structure de surface (5, 15, 21) peut être produite par CAO ou au moins un paramètre de machine.

9. Outil de moussage selon l'une quelconque des revendications précédentes, **caractérisé en ce qu'au** moins une partie (4, 14, 20) de la structure de surface (5, 15, 21) est post-traitée par au moins une étape de procédé, de préférence par un procédé abrasif et/ou l'abrasion au laser et/ou un procédé de lissage chimique ou électrique et/ou un procédé de compactage ou de microformage.

10. Outil de moussage selon l'une quelconque des revendications précédentes, **caractérisé en ce qu'au** moins une partie (4, 14, 20) présente une structure de surface (5, 15, 21) de telle sorte qu'un produit fabriqué au moyen de l'outil de moussage (1, 11, 17) peut être muni d'au moins une information lors de sa fabrication.

11. Procédé de fabrication d'un outil à mousse (1, 11, 17) selon l'une quelconque des revendications précédentes, comportant au moins une section formant une cavité (3, 13, 18) (2, 12, 19).

12. Procédé selon la revendication 11, **caractérisé en ce qu'au** moins une partie (4, 14, 20) de la structure de surface (5, 15, 21) est fabriquée à partir d'un matériau de construction solidifiable au moyen d'un jet d'énergie, en particulier sous forme de poudre, par exposition sélective successive par couches et par solidification sélective par couches consécutives de couches de matériaux de construction.

13. Procédé selon la revendication 11 ou 12, **caractérisé en ce qu'au** moins une partie (4, 14, 20) de la structure de surface (5, 15, 21) est appliquée ultérieurement sur un composant existant ou qu'une structure de surface existante (5, 15, 21) est complétée par au moins une partie (4, 14, 20).
